# EUROPEAN PATENT APPLICATION

(11) **EP 4 131 615 A1**
(43) Date of publication of application: **08.02.2023**
(21) Application number: 22756364.0
(22) Date of filing: 12.01.2022
(51) Int. Cl.: H01M 50/30, H01M 50/375, H01M 50/211

(54) **BATTERY MODULE AND BATTERY PACK INCLUDING SAME**

(30) Priority: 22.02.2021 KR 20210023581
(71) Applicant: LG Energy Solution, Ltd., Seoul 07335 (KR)
(72) Inventor: LEE, Junghoon, Daejeon 34122 (KR); KIM, Kwangmo, Daejeon 34122 (KR)
(74) Representative: Goddar, Heinz J.
(86) International application number: PCT/KR2022/000580
(87) International publication number: WO 2022/177158

(57) **Abstract**

A battery module according to an embodiment of the present disclosure includes a battery cell stack in which a plurality of battery cells are stacked in one direction, a module frame that houses the battery cell stack and has an inner surface and an outer surface, and an end plate that is coupled to the module frame and covers the front surface or rear surface of the battery cell stack, wherein a venting part is formed in the module frame, and wherein the venting part comprises a pattern part having a concentric diagram shape and a support part for supporting the pattern part.

## Description

### [TECHNICAL FIELD]

### Cross Citation with Related Application(s)

This application claims the benefit of Korean Patent Application No. 10-2021-0023581 filed on February 22, 2021 with the Korean Intellectual Property Office, the content of which is incorporated herein by reference in its entirety.

The present disclosure relates to a battery module and a battery pack including the same, and more particularly, to a battery module having improved safety and a battery pack including the same.

### [BACKGROUND ART]

Along with the technology development and increased demand for mobile devices, demand for secondary batteries as energy sources has been increasing rapidly. In particular, a secondary battery has attracted considerable attention as an energy source for power-driven devices, such as an electric bicycle, an electric vehicle, and a hybrid electric vehicle, as well as an energy source for mobile devices, such as a mobile phone, a digital camera, a laptop computer and a wearable device.

When the secondary battery is mainly used in devices such as mobile devices, use of one or two to four battery cells has no difficulty in achieving the storage capacity and energy output level required by each device, but medium-or large-sized devices such as automobiles require high-power and large-capacity storage devices and thus, when a small number of battery cells are used as described above, major problems may occur in terms of energy storage capacity and energy output. Therefore, in the medium-or large-sized device, it is common to mount a battery module in which a plurality of battery cells are electrically connected or a battery pack including a plurality of such battery modules.

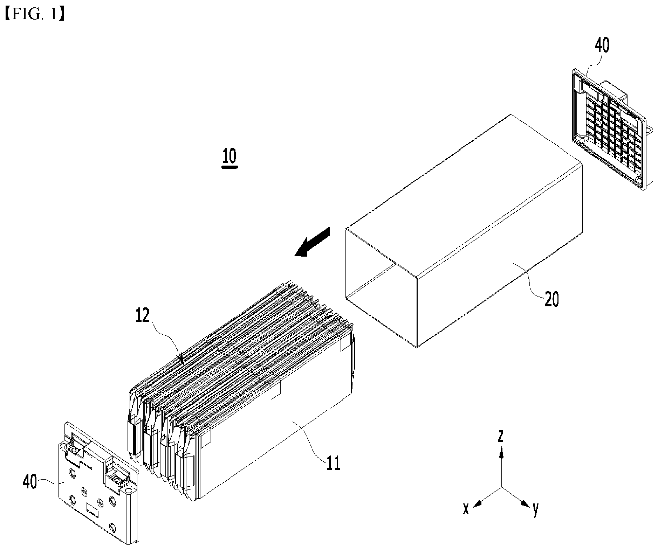

Fig. 1 is an exploded perspective view of a conventional battery module.

Referring to Fig. 1, the conventional battery module 10 includes a battery cell stack 12 in which a plurality of battery cells 11 are stacked, a module frame 20 for protecting the battery cell stack 12 from external impact, heat or vibration, and an end plate 40 that covers the front surface and/or rear surface of the battery cell stack 12.

The battery cell stack 12 is located in a closed structure by the coupling between the module frame 20 and the end plate 40. In order to maximize the energy storage capacity of the battery module 10, each of the battery cells 11 is mainly located at a narrow interval within the battery cell stack 12.

However, such a design of the battery module 10 is likely to impair the durability or longterm stability of the battery module 10. Specifically, when the internal pressure of the battery cell 11 increases due to overcharging or the like, high-temperature heat, gas, or flame may be discharged to the outside of the battery cell 11, wherein heat, gas, or flame discharged from one battery cell 11 is transferred to another adjacent battery cell 11 at a narrow interval, which may cause continuous ignition phenomena. Additionally, heat, gas, or flame discharged from each battery cell 11 may be discharged toward an opening formed in the end plate 40. In this process, a busbar (not shown) located between the end plate 40 and the battery cell 11 may be damaged.

Moreover, the plurality of battery modules 10 in the battery pack are arranged such that at least two end plates 40 face each other. Therefore, when heat, gas, or flame generated within the battery module 10 is discharged to the outside of the battery module 10, it may affect the performance and stability of the plurality of battery cells 11 in another adjacent battery module 10.

Therefore, there is a need to develop the battery module 10 having improved durability and safety by effectively delaying the heat propagation speed during ignition inside the battery module 10 and allowing the generated heat, gas or flame to be rapidly discharged to the outside of the battery module 10.

### [DETAILED DESCRIPTION OF THE INVENTION]

### [Technical Problem]

It is an object of the present disclosure to provide a battery module that effectively suppresses flames at the time of occurring an ignition inside the battery module and effectively discharges internal heat, gas, or flames, and a battery pack including the same.

The objects of the present disclosure are not limited to the aforementioned objects, and other objects which are not described herein should be clearly understood by those skilled in the art from the following detailed description and the accompanying drawings.

### [Technical Solution]

According to one embodiment of the present disclosure, there is provided a battery module comprising: a battery cell stack in which a plurality of battery cells are stacked in one direction, a module frame that houses the battery cell stack and has an inner surface and an outer surface, and an end plate that is coupled to the module frame and covers the front surface or rear surface of the battery cell stack, wherein a venting part is formed in the module frame, and wherein the venting part comprises a pattern part having a concentric diagram shape and a support part for supporting the pattern part.

The support part may have an X-shape.

The venting part may include at least one of an inlet port formed in the inner surface of the module frame and a venting hole in the form of a hole that defines an outlet port formed on the outer surface.

A terminal region of the venting hole has a reverse tapered shape, and the terminal region may be a region including the inlet port or the outlet port.

Based on the axial cross section of the venting hole, the side surface of the venting hole extending between the inlet port and the outlet port has a round shape, and an effluent flowing in through the inlet port may be moved to the outlet port along the round shape.

A blocking sheet may be located at a part corresponding to the inlet port of the venting part.

The blocking sheet may be formed of a material that melts in accordance with the temperature inside the module frame.

The blocking sheet may include at least one selected from the group consisting of inorganic carbonate, inorganic phosphate, and inorganic sulfate.

When a direction in which the plurality of battery cells are stacked is defined as a stacking direction, the venting part may be formed on one surface of the module frame extending along the stacking direction.

When the direction from the front surface to the rear surface of the battery cell stack is defined as the longitudinal direction, the longitudinal position of the venting part may be closer to the front surface or rear surface of the battery cell stack than to the central part of the battery cell stack having the same longitudinal distance as the front and rear surfaces of the battery cell stack.

The battery cell includes an electrode lead protruding from one end part of the battery cell, and the electrode lead may be located on the front surface or rear surface of the battery cell stack.

According to another embodiment of the present disclosure, there is provided a battery pack comprising at least one battery module described above.

### [Advantageous Effects]

According to embodiments, the venting part is formed in the module frame, whereby it is possible to effectively suppress flames at the time of occurring an ignition inside the battery module and effectively discharges internal heat.

The effects of the present disclosure are not limited to the effects mentioned above and additional other effects not described above will be clearly understood from the description of the appended claims by those skilled in the art.

### [BRIEF DESCRIPTION OF THE DRAWINGS]

Fig. 1 is an exploded perspective view of a conventional battery module.
Fig. 2 is a perspective view of a battery module according to an embodiment of the present disclosure;
Fig. 3 is an exploded perspective view of the battery module of Fig. 2;
Fig. 4 is a diagram showing a battery cell included in the battery module of Fig. 2;
Fig. 5 is a cross-sectional view of the battery module of Fig. 2 taken along the line A-A;
Fig. 6 is a diagram showing a direction in which heat, gas, flame or the like generated in the internal space of the battery module according to an embodiment of the present disclosure is discharged through the venting part;
Fig. 7 is a diagram showing an example of a venting part of a battery module according to an embodiment of the present disclosure; and
Fig. 8 is a view showing that the blocking sheet is provided in the venting part of the battery module according to an embodiment of the present disclosure.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are irrelevant to the description will be omitted to clearly describe the present disclosure, and same reference numerals designate same or like elements throughout the description.

Further, in the drawings, the size and thickness of each element are arbitrarily enlarged or reduced illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

In addition, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, the word "on" or "above" means disposed on or below a reference portion, and does not necessarily mean being disposed on the upper end of the reference portion toward the opposite direction of gravity. Meanwhile, similar to the case where it is described as being located "on" or "above" another part, the case where it is described as being located "below" or "under" another part will also be understood with reference to the above-mentioned contents.

Further, throughout the description, when a portion is referred to as "including" or "comprising" a certain component, it means that the portion can further include other components, without excluding the other components, unless otherwise stated.

Further, throughout the description, when referred to as "planar", it means when a target portion is viewed from the upper side, and when referred to as "cross-sectional", it means when a target portion is viewed from the side of a cross section cut vertically.

Hereinafter, a battery module according to an embodiment of the present disclosure will be described.

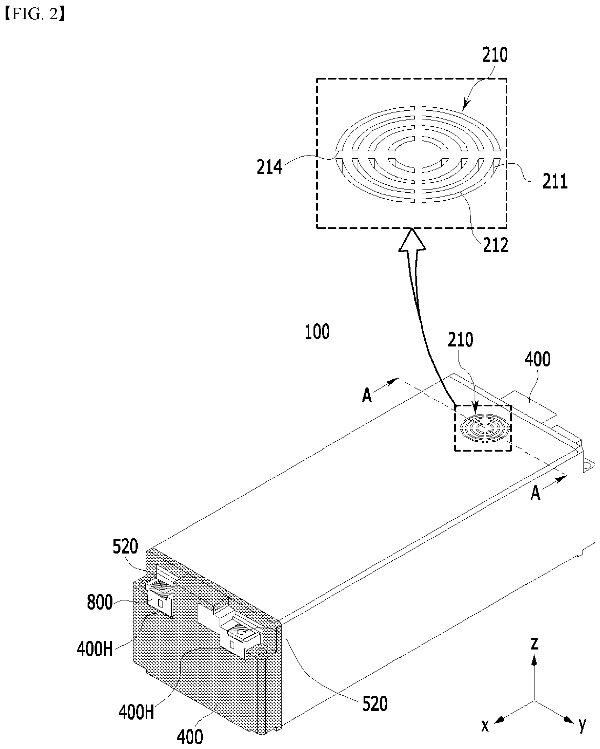

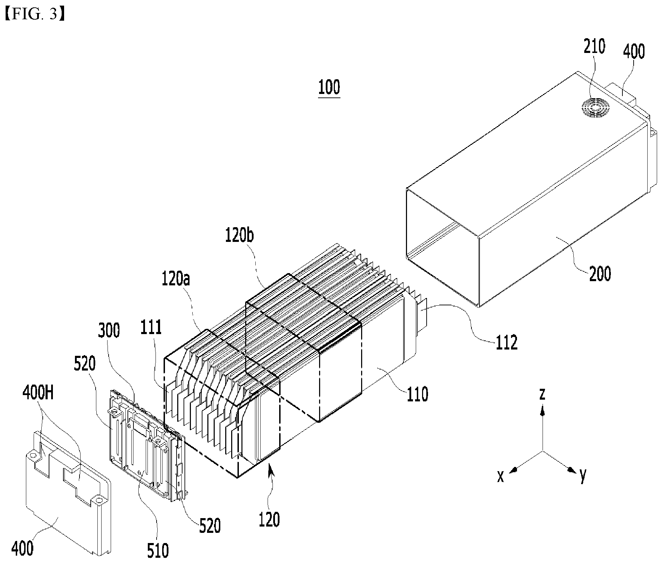

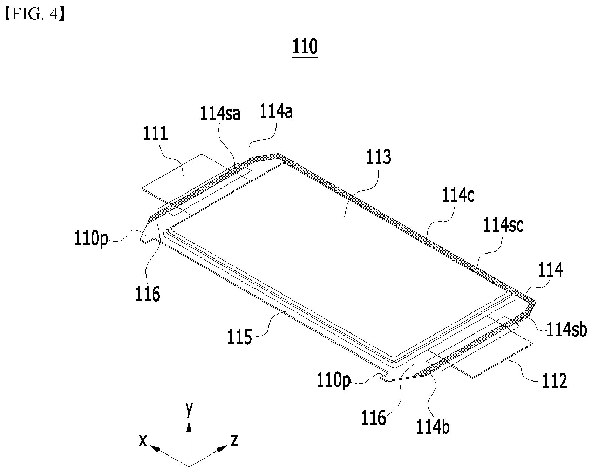

Fig. 2 is a perspective view of a battery module according to an embodiment of the present disclosure. Fig. 3 is an exploded perspective view of the battery module of Fig. 2. Fig. 4 is a diagram showing a battery cell included in the battery module of Fig. 2.

Referring to Figs. 2 and 3, the battery module 100 according to an embodiment of the present disclosure may include a battery cell stack 120 in which a plurality of battery cells 110 are stacked in one direction, a module frame 200 that houses the battery cell stack 120, busbar frames 300 that are located on the front surface and/or rear surface of the battery cell stack 120, end plates 400 that cover the front surface and/or rear surface of the battery cell stack 120, and busbars 510 and 520 that are mounted on the busbar frame 300.

The battery cells 110 may be provided in a pouch shape that can maximize the number of cells stacked per unit area. The battery cell 110 provided in the pouch shape can be manufactured by housing an electrode assembly including a positive electrode, a negative electrode, and a separator in a cell case 114 of a laminate sheet and then heat-sealing the sealing part of the cell case 114. However, it will be obvious that the battery cell 110 need not be essentially provided in a pouch shape, and can be provided in a square, cylindrical, or various other forms, at a level where the storage capacity required by the device to be mounted in the future is achieved.

Referring to Fig. 4, the battery cell 110 may include two electrode leads 111 and 112. The electrode leads 111 and 112 may have a structure protruding from one end of the cell main body 113, respectively. Specifically, one end of respective electrode leads 111 and 112 is located inside the battery cell 110 and thus is electrically connected to the positive electrode or negative electrode of the electrode assembly. The other end of the respective electrode leads 111 and 112 is protruded to the outside of the battery cell 110, and thus can be electrically connected with a separate member, for example, the busbars 510 and 520.

The electrode assembly in the cell case 114 can be sealed by the sealing parts 114sa, 114sb and 114sc. The sealing parts 114sa, 114sb and 114sc of the cell case 114 may be located on both end parts 114a and 114b and one side part 114c connecting them.

The cell case 114 is generally formed of a laminate structure of a resin layer/metallic thin film layer/resin layer. For example, when a surface of the cell case is formed of an O(oriented)-nylon layer, it tends to slide easily by an external impact when a plurality of battery cells 110 are stacked to form a medium- or large-sized battery module 100. Therefore, in order to prevent this sliding and maintain a stable stacking structure of the battery cells 110, an adhesive member, for example, a sticky adhesive such as a double-sided tape or a chemical adhesive coupled by a chemical reaction upon adhesion, can be adhered to the surface of the battery case 114 to form a battery cell stack 120.

The connection part 115 may refer to a region extending along the longitudinal direction at one end of the cell case 114 in which the above-mentioned sealing parts 114sa, 114sb and 114sc are not located. A protrusion part 110p of the battery cell 110 called a bat-ear may be formed at an end part of the connection part 115. Further, the terrace part 116 may refer to a region between electrode leads 111 and 112 in which a part protrudes to the outside of the cell case 114, and the cell main body 113 located inside the cell case 114, on the basis of the edge of the cell case 114.

Meanwhile, the battery cell 110 provided in the pouch type may have a length, a width and a thickness, and the longitudinal direction, the width direction, and the thickness direction of the battery cell 110 may be a direction perpendicular to each other.

Here, the longitudinal direction of the battery cell 110 may be defined according to the direction in which the electrode leads 111 and 112 protrude from a cell case 114. For example, one electrode lead 111 protrudes in one direction (x-axis direction) from one end part 114a of the cell case 114, and the other electrode lead 112 may protrude from one end part 114b of the cell case 114 in a direction opposite to the above-mentioned one direction (-x axis direction). At this time, the longitudinal direction of the battery cell 110 may be defined as an x-axis direction or a - x-axis direction.

Also, the width direction of the battery cell 110 herein may be a z-axis direction or a -z-axis direction from one side part 114c of battery cell 110 to a connection part 115 or from the connection part 115 to the one side part 114c of the battery cell 110 as shown in Fig. 4. Further, the thickness direction of the battery cell 110 herein may be defined as a y-axis direction or a -y-axis direction perpendicular to the width direction and the length direction.

Meanwhile, the longitudinal direction, the width direction, and the thickness direction have been described above on the basis of the axis direction shown through the drawings, but this is only for convenience of explanation and thus, the thickness direction, length direction, and width direction described above can be defined differently from the drawings shown in accordance with the structure of the battery cell 110.

The battery cell stack 120 may be one in which a plurality of electrically connected battery cells 110 are stacked along one direction. A direction in which the plurality of battery cells 110 are stacked (hereinafter referred to as a 'stacking direction') may be a y-axis direction as shown in Figs. 2 and 3 (or it may be a -y-axis direction, and in the following, the expression 'axial direction' may be interpreted as including all +/- directions).

Here, the stacking direction of the battery cell stack 120 may be the thickness direction of the battery cell 110. This may be because the thickness of the battery cell 110 is designed so as to have a value smaller than the length and width of the battery cell 110, and its volume can be minimized when stacked along the above-mentioned direction. Therefore, it will not be interpreted that the stacking direction of the battery cell stack 120 and the thickness direction of the battery cell 110 are always the same, and the stacking direction thereof can be determined in accordance with the shape of the battery cell 110 .

The battery cell stack 120 can have a shape similar to that of a rectangular parallelepiped as a whole. Each surface of the battery cell stack 120 can be defined by the stacking direction (y-axis direction).

For example, two surfaces facing each other in the stacking direction among one surface of the battery cell stack 120 may be defined as side surfaces of the battery cell stack 120. One surface of one battery cell 110 having a length and a width may be located on a side surface of the battery cell stack 120.

Further, among one surface of the battery cell stack 120, a surface facing each other on the axis perpendicular to the stacking direction may be defined as a front surface/a rear surface or an upper surface/a lower surface. The front surface, rear surface, upper surface or lower surface of the battery cell stack 120 may be a surface extending along the stacking direction of the battery cell stack 120. One surface of a plurality of battery cells 110 may be located side by side on the front surface, rear surface, upper surface and lower surface of the battery cell stack 120. Here, one surface of the battery cells 110 positioned side by side may be a surface parallel to the thickness direction.

A direction in which the battery cell stack 120 heads from the front surface to the rear surface, or a backward direction thereof may be defined as the longitudinal direction of the battery cell stack 120, which may be an x-axis direction. Further, a direction in which the battery cell stack 120 heads from the upper surface to the lower surface, or a backward direction thereof may be defined as the width direction of the battery cell stack 120, which may be a z-axis direction.

The longitudinal direction of the battery cell stack 120 may be substantially the same as the longitudinal direction of the battery cells 110. The electrode leads 111 and 112 of the battery cells 110 may be located on the front surface and rear surface of the battery cell stack 120. As shown in Fig. 3, when the electrode leads 111 and 112 of each battery cell 110 are arranged to be concentrated on the front surface and rear surface of the battery cell stack 120, the busbars 510 and 520 of the battery module 100 may be designed so as to be located close to the front surface and rear surface of the battery cell stack 120. Thereby, the busbars 510 and 520 may more easily provide an electrical connection between the electrode leads 111 and 112 located inside the battery module 100 and an electrical member located outside the battery module 100.

The battery cell stack 120 may include a peripheral region 120a and a central region 120b that are defined according to the positions in the longitudinal direction. Specifically, the battery cell stack 120 may include a central region 120b including a central surface (or a central part) spaced apart by the same distance from the front and rear surfaces of the battery cell stack 120, and a peripheral region 120a spaced apart from the central region. Here, the peripheral region 120a may be located closer to the busbar frame 300 , the end plate 400, and the busbars 510 and 520, which will be described later, than the central region 120b. Further, here, the peripheral region 120a may include a region in which the electrode leads 111 and 112 are located, but this is not always the case.

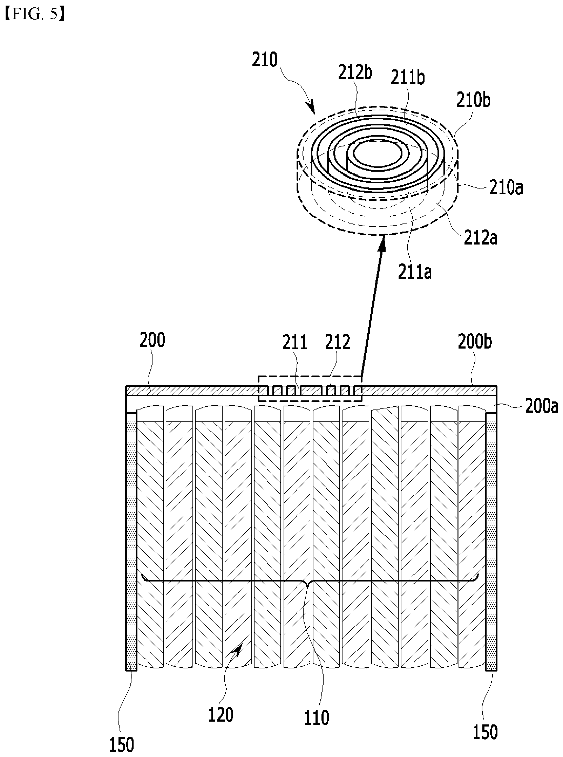

The module frame 200 may be for protecting the battery cell stack 120 and the electrical components connected thereto from external physical impacts. The module frame 200 may be house the battery cell stack 120 and the electric device connected thereto in the internal space of module frame 200. Here, the module frame 200 includes an inner surface 200a (see Fig. 5) and an outer surface 200b (see Fig. 5), and the inner space of the module frame 200 may be defined by the inner surface 200a.

The structure of the module frame 200 may be various. In one example, the structure of the module frame 200 can be the structure of a mono frame. Here, the mono frame may be in a metal plate shape in which the upper surface, the lower surface and both side surfaces are integrated. The mono frame can be manufactured by extrusion molding. In another example, the structure of the module frame 200 may be a structure in which a U-shaped frame and an upper plate are combined. In the case of a structure in which the U-shaped frame and the upper plate are combined, the structure of the module frame 200 may be formed by coupling the upper plate to the upper side surfaces of the U-shaped frame, which is a metal plate in which the lower surface and both sides are combined or integrated. Each frame or plate can be manufactured by press molding. Further, the structure of the module frame 200 can be provided in the structure of an L-shaped frame in addition to the mono frame or the U-shaped frame, and may be provided in various structures that are not described in the above-mentioned examples.

The structure of the module frame 200 may be provided in a shape that is opened along the longitudinal direction of the battery cell stack 120. The front surface and rear surface of the battery cell stack 120 may not be covered by the module frame 200. The electrode leads 111 and 112 of the battery cells 110 may not be covered by the module frame 200. The front surface and rear surface of the battery cell stack 120 may be covered by the busbar frame 300, the end plate 400, the busbars 510 and 520, or the like, which will be described later. Thereby, the front surface and rear surface of the battery cell stack 120 can be protected from external physical impacts and the like.

Meanwhile, a compression pad 150 may be located between the battery cell stack 120 and one side surface of the inner surface of the module frame 200. At this time, the compression pad 150 may be located on the y-axis of the battery cell stack 120, and may face at least one surface of the two battery cells 110 at both ends of the battery cell stack 120.

Further, although not shown in the figure, a thermal conductive resin may be injected between the battery cell stack 120 and the lower surface of the module frame 200, and a thermal conductive resin layer (not shown) may be formed between the battery cell stack 120 and the lower surface of the module frame 200 through the injected thermal conductive resin. At this time, the thermal conductive resin layer may be located on the z-axis of the battery cell stack 120, and the thermal conductive resin layer may be formed between the battery cell stack 120 and the bottom surface (or may be referred to as a bottom part) located on the -z axis of the module frame 200.

The busbar frame 300 can be located on one surface of the battery cell stack 120 to cover one surface of the battery cell stack 120 and, at the same time, guide the connection between the battery cell stack 120 and an external device. The busbar frame 300 may be located on the front surface or rear surface of the battery cell stack 120. At least one of the busbars 510 and 520 and the module connector may be mounted on the busbar frame 300. As a specific example, referring to Figs. 2 and 3, one surface of the busbar frame 300 is connected with the front surface or rear surface of the battery cell stack 120, and the other surface of the busbar frame 300 may be connected with the busbars 510 and 520.

The busbar frame 300 may include an electrically insulating material. The busbar frame 300 can restrict the busbars 510 and 520 from making contact with other parts of the battery cells 110, except the parts where they are joined to the electrode leads 111 and 112, and can prevent the occurrence of an electrical short circuit.

Although not shown in the figure, the busbar frame 300 may be formed in two numbers, and may include a first busbar frame located on the front surface of the battery cell stack 120 and a second busbar frame located on the rear surface of the battery cell stack 120.

The end plate 400 can be for protecting the battery cell stack 120 and electrical equipment connected thereto from external physical impacts by sealing the opened surface of the module frame 200. For this purpose, the end plate 400 may be made of a material having a predetermined strength. For example, the end plate 400 may include a metal such as aluminum.

The end plate 400 may be coupled (joined, sealed or closed) to the module frame 200 while covering the busbar frame 300 or the busbars 510 and 520 located on one surface of the battery cell stack 120. Each edge of the end plate 400 may be coupled to a corresponding edge of the module frame 200 by a method such as welding. Further, an insulating cover 800 for electrical insulation may be located between the end plate 400 and the busbar frame 300.

Although not shown in the figure, the end plate 400 may be formed in two numbers, and may include a first end plate located on the front surface of the battery cell stack 120 and a second end plate located on the rear surface of the battery cell stack 120.

The first end plate can be joined to the module frame 200 while covering the first busbar frame on the front surface of the battery cell stack 120, and the second end plate can be joined to the module frame 200 while covering the second busbar frame. In other words, a first busbar frame may be located between the first end plate and the battery cell stack 120, and a second busbar frame may be located between the second end plate and the rear surface of the battery cell stack 120.

The busbars 510 and 520 may be mounted on one surface of the busbar frame 300, and may be for electrically connecting the battery cell stack 120 or the battery cells 110 and an external device circuit. The busbars 510 and 520 are located on the battery cell stack 120 or the busbar frame 300 and the end plate 400, whereby they can be protected from external impacts and the like, and deterioration of durability can be minimized due to external moisture and the like.

The busbars 510 and 520 can be electrically connected to the battery cell stack 120 through the electrode leads 111 and 112 of the battery cells110. Specifically, the electrode leads 111 and 112 of the battery cells 110 pass through a slit formed in the busbar frame 300 and then are bent to be connected to the busbars 510 and 520. The battery cells 110 constituting the battery cell stack 120 may be connected in series or in parallel by the busbars 510 and 520.

The busbars 510 and 520 may include a terminal busbar 520 for electrically connecting one battery module 100 to another battery module 100. At least a part of the terminal busbar 520 may be exposed to the outside of the end plate 400 in order to be connected with another external battery module 100, and the end plate 400 may be provided with a terminal busbar opening 400H for this purpose.

The terminal busbar 520 may further include a protrusion part that is protruded upward, unlike other busbars 510, and the protrusion part may be exposed to the outside of the battery module 100 via a terminal busbar opening 400H. The terminal busbar 520 may be connected with another battery module 100 or a BDU (Battery Disconnect Unit) via a protrusion part exposed through the terminal busbar opening 400H, and may form a high voltage (HV) connection with them.

Meanwhile, as described above, an ignition phenomenon may occur inside the battery module 100 in which the battery cells 110 are stacked at a high density. When an ignition phenomenon occurs in one battery module 100, heat, gas, flame or the like of the battery module 100 are transferred to the battery module 100 adjacent thereto, thereby occurring continuous ignition phenomena between the battery modules 100. Therefore, there is a problem that the durability and stability of the battery module 100 or a battery pack including the same is reduced.

Therefore, in the following, a venting part 210 capable of solving the above ignition phenomena and thus improving the durability and stability of the battery module 100 will be described.

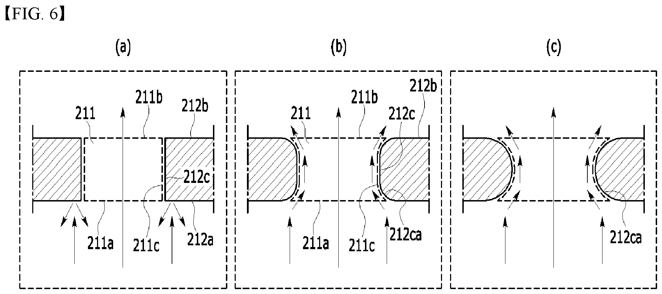

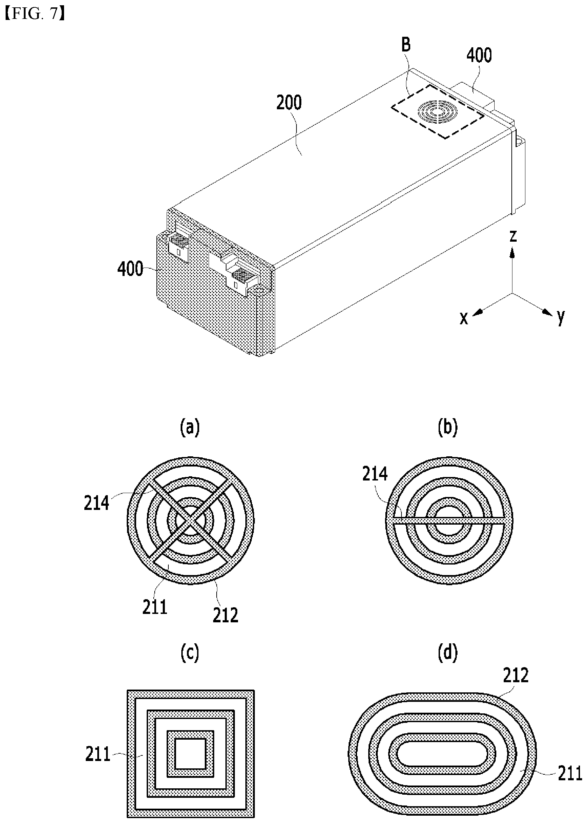

Fig. 5 is a cross-sectional view of the battery module of Fig. 2 taken along the line A-A. Fig. 6 is a diagram showing a direction in which heat, gas, flame or the like generated in the internal space of the battery module according to an embodiment of the present disclosure is discharged through the venting part. Fig. 7 is a diagram showing an example of a venting part of a battery module according to an embodiment of the present disclosure.

Referring to Figs. 5 and 6, the module frame 200 according to an embodiment of the present disclosure may include a venting part 210 penetrating the inner surface 200a and the outer surface 200b of the module frame 200.

The venting part 210 may be for communicating the inside of the battery module 100 sealed by the module frame 200, the end plate 400 or the like with the outside of the battery module 100. The venting part 210 may be for discharging heat, gas, flame or the like generated at the time of occurring an ignition inside the battery module 100 to the outside of the battery module 100.

Meanwhile, when the module frame 200 is provided with a venting part 210 for communicating the inside and the outside, dust, impurities, etc. outside the module frame 200 may enter the inside of the module frame 200 through the hole structure of the venting part 210. Therefore, in order to prevent foreign matter from flowing in through the hole of the venting part 210, it may be preferable to reduce the size of the hole of the venting part 210.

Therefore, the venting part 210 according to an embodiment of the present disclosure may be designed to include a plurality of holes with small size. Here, the hole of the venting part 210 may be referred to as a venting hole 211, and the size of the venting hole 211 can be determined by a pattern part 212 included in the venting part 210 and a support part 214 for supporting the same. At this time, the pattern part 212 may be interpreted as including the support part 214, but for convenience of explanation, it will be described separately below.

The venting part 210 may include a venting hole 211 that communicates with an inlet port 210a formed on the inner surface 200a of the module frame 200 and an outlet port 210b formed on the outer surface 200b. The hole-inlet port 211a of the venting hole 211 may be located in the inlet port 210a of the venting part 210, and a hole-outlet port 211b of the venting hole 211 may be located at the outlet port 210b of the venting part 210. The hole inlet port 211a, the hole-outlet port 211b, and the hole-side surface 211c extending between the hole-inlet 211a and the hole-outlet 211b may be defined by the venting hole 211 .

The venting part 210 may include a pattern part 212 having a concentric diagram pattern shape and a support part 214 for supporting the shape of the pattern part 212. Based on the radial cross-section of the venting part 210, the pattern part 212 may include a plurality of diagrams whose centers coincide with each other and enter and which are radially spaced apart from each other. Additionally, based on the radial cross-section of the venting part 210, the support part 214 may be provided in the form of a bar, and may support a plurality of diagrams included in the pattern part 212. The diagrams of the pattern part 212 may be connected to each other by the support part 214, and the entire pattern shape of the pattern part 212 may be maintained through the support part 214.

The shape, size, position, or number of the venting holes 211 may be defined by the pattern shape of the pattern part 212 and the shape of the support part 214 that crosses the pattern part 212.

Since the overall shape of the venting hole 211 may be mainly determined in accordance with the shape of the pattern part 212. When describing the shape of the venting hole 211, the support part 214 will be omitted in the following, and the shape of the venting hole 211 defined by the pattern part 212 will be mainly described.

The shape of the venting hole 211 may be a tube shape or a part of the tube shape, wherein the hole-side surface 211c of the venting hole 211 corresponding to the tubular circumferential surface may be mainly defined by the wall surface (or referred to as the side surface) 212c of the pattern part 212.

Meanwhile, the venting hole 211 may have a tube shape as shown in Fig. 6(a), but may have a deformed tube shape as shown in Figs. 6(b) and 6(c). Here, the deformed tube shape may mean that at least a part of the circumferential surface is deformed in a convex or concave shape in the radial direction because the size and shape of the radial cross section are not constant. In a conventional tube shape, the axial cross-section may have an angular shape, but in a deformed tube shape, the axial cross-section may have a round shape.

In a specific example, the venting hole 211 may have a shape whose radial cross-section (or diameter) increases toward the terminal end in the axial direction, like a bottleneck of a gourd bottle. As shown in Figs. 6(b) and 6(c), the terminal region of the venting hole 211 may have a radially outwardly unfolded shape. A terminal region of the venting hole 211 may have a reverse tapered shape Here, the terminal region of the venting hole 211 may refer to a region located at the end part of the shaft of the venting hole 211, and the central region of the venting hole 211 may refer to a region located between the two terminal regions described above.

The reverse tapered shape of the venting hole 211 may be formed by bending a part of the wall surface 212c of the pattern part 212. At this time, in the axial cross-section of the venting part 210, the wall surface 212c of the pattern part 212 may have a round shape. In the venting part 210, the edge part 212ca corresponding to the reverse tapered shape may also have a round shape. Here, the edge part 212ca may mean a part between the lower surface 212a (or referred to as the inflow surface) of the pattern portion 212 located at the inlet port 210a and the wall surface 212c of the pattern part 212.

When the two terminal regions of the venting hole 211 have a reverse tapered shape, the internal gas of the battery module 100 may be rapidly moved to the outside of the battery module 100 through the venting holes 211. Specifically, the central region located between the two terminal regions may have a smaller volume per unit length axial than the relatively terminal region. The gas or the like may enter the central region via one terminal region close to the hole-inlet port 211a. As the volume decreases, the pressure can increase, and allow quick movement to the other terminal region close to the hole-outlet port 211b, which is a relatively low pressure environment. Through this, the gas inside the battery module 100 can be rapidly discharged to the outside.

Further, in the above-mentioned drawings, both terminal regions of the venting hole 211 were shown to have a reverse tapered shape, but only one of the two terminal regions of the venting hole 211 may have a reverse tapered shape. Even if only one of the two terminal regions of the venting hole 211 has a reverse tapered shape, it can promote the outflow of gas rather than a conventional tube shape, so that the gas discharge effect of the venting hole 211 provided as shown in Figs. 6(b) and 6(c) can be larger than that of the venting hole 211 provided as shown in Fig. (a).

Meanwhile, as shown in Fig. 6(a), when the edge part 212ca has an angled shape whereby the venting hole 211 is provided into a tube shape as the edge part 212ca, the internal gas may collide with the edge part 212ca in the process of discharging heat, gas, or flame inside the battery module 100 to the outside, and the collided gas or the like enters the inside of the battery module 100 again, thus causing a problem of impairing the ventilation function of the venting part 210.

Meanwhile, as shown in Figs. 6(b) and 6(c), when the edge part 212ca has a round shape whereby the venting hole 211 is provided into a reverse tapered shape, the internal gas or the like that has collided with the edge part 212ca may be moved toward the hole-outlet port 211b along the direction guided by the round shape of the edge part 212ca.

In this manner, since the discharge path of gas or the like is formed in accordance with the shape of the edge part 212ca close to the inlet port 210a, the ventilation effect of the venting part 210 may vary depending on the angle (hereinafter, referred to as a 'diffraction angle') formed by the edge part 212ca with the inlet port 210a based on the axial cross-section of the venting part 210. It can be explained that the diffraction angle of Fig. 6(b) is larger than that of Fig. 6(a), and Fig. 6(c) is larger than that of Fig. 6(b), wherein the diffraction angle can be calculated based on a tangent line at one point of the edge part 212ca. As the diffraction angle is larger, the ventilation function of the venting part 210 can be improved, but the ventilation function may also depend on the size of the round shape of the edge part 212ca and the diameter of the central region of the venting hole 211. Therefore, as the diffraction angle is larger, the ventilation function of the venting unit 210 is not necessarily improved.

The venting part 210 may be formed on at least one surface of the module frame 200. Here, the module frame 200 may be in a state in which two surfaces disposed to face each other on the x-axis, which is the longitudinal direction of the battery cell stack 120 , are opened. The module frame 200 may have two surfaces disposed to face each other on the y-axis axis (hereinafter, referred to as 'surface on the y-axis') and two surfaces disposed to face each other on the z-axis axis (hereinafter, referred to as 'surface on the z-axis').

Here, the surface on the y-axis of the module frame 200 may face the side surface of the battery cell stack 120. One surface on the y-axis of the module frame 200 may be a surface extending along the width direction or the length direction of the battery cell stack 120. One surface on the y-axis of the module frame 200 may face one surface of one battery cell 110. For convenience of explanation, one surface on the y-axis of the module frame 200 may be referred to as a side surface of the module frame 200.

Further, here, one surface on the z-axis of the module frame 200 may face the upper surface or the lower surface of the battery cell stack 120. One surface on the z-axis of the module frame 200 may be a surface extending along the stacking direction or the longitudinal direction of the battery cell stack 120. One surface on the z-axis of the module frame 200 may face one surface of each of the plurality of battery cell stacks 120 arranged side by side in one direction. For convenience of explanation, one surface on the z-axis of the module frame 200 may also be referred to as an upper surface or a lower surface (bottom surface or bottom part).

As shown in Figs. 5 and 6, the venting part 210 may be preferably formed on one surface on the z-axis of the module frame 200. This may be because when the venting unit 210 is located on one surface on the z-axis of the module frame 200, the inlet port 210a of the venting part 210 may be located closer to the plurality of battery cells 110 of the battery cell stack 120 than when located on one surface on the y-axis, so that heat, gas, or flame discharged from the plurality of battery cells 110 can be rapidly discharged to the outside. In this manner, the position of the venting part 210 on the module frame 200 may be determined depending on the position of one surface of the battery cell stack 120 in which one surface of the plurality of battery cells 110 are arranged side by side.

Meanwhile, the position of the venting part 210 on the module frame 200 can be determined according to the arrangement of the battery module 100 in the battery pack. For example, the plurality of battery modules 100 may be arranged along the y-axis or the x-axis in the battery pack, and may not be arranged in the z-axis direction. At this time, as shown in Figs. 5 and 6, when the venting part 210 is formed on one surface on the z-axis of the module frame 200, other adjacent battery modules 100 are not located on the discharge path extending from the inlet port 210a to the outlet port 210b of the venting part 210, thereby being able to minimize the influence of the discharged heat, gas, or flame on other battery modules 100. Meanwhile, when the -z-axis surface among the two surfaces on the z-axis is the mounting surface (or the bottom surface) connected to the battery pack, the venting part 210 may be formed on the +z axis.

The venting part 210 may be formed entirely on one surface of the module frame 200, or may be formed on a part of one surface of the module frame 200. Here, when the venting part 210 is formed on a part of one surface of the module frame 200, the venting part 210 may be preferably located at the peripheral part of the module frame 200. Specifically, when a high-temperature gas or flame is generated from the battery cell 110, the high-temperature gas or flame may be transmitted to the adjacent battery module 100 through the terminal busbar opening 400H or the like so that the performance of the adjacent battery module 100 can be deteriorated. Further, if the flame is discharged directly, the flame is also transmitted to the adjacent battery module, which may cause chain ignitions and explosions. Therefore, when the venting part 210 is formed in the peripheral part of the module frame 200 close to the busbar frame 300, the end plate 400 and the busbars 510 and 520, the ignition phenomenon in the battery module 100 can be resolved through the venting part 210, so that the influence of heat, gas, or flame on other battery modules 100 can be minimized. Additionally, the venting part 210 may be provided at a position in the longitudinal direction corresponding to the peripheral regions of the electrode leads 111 and 112 included in the battery cell stack 120. In this case, heat, gas, or flame generated in the peripheral area of the electrode leads 111 and 112 may be more effectively discharged through the venting part 210. Here, the peripheral region of the electrode leads 111 and 112 may refer to a region including the electrode leads 111 and 112 and spaced apart from the electrode leads 111 and 112 by a predetermined distance or less.

At this time, the peripheral part of the module frame 200 refers to a part corresponding to the peripheral region 120a of the battery cell stack 120 among the module frame 200 based on the battery module 100 coupled to the completed body. Here, the peripheral region 120a of the battery cell stack 120 may include the peripheral regions of the electrode leads 111 and 112, but this is not necessarily the case. Further, the central part of the module frame 200 herein may refer to a part corresponding to the central region 120b of the battery cell stack 120 in the module frame 200.

Meanwhile, in Figs. 2 to 6 described above, it is shown that the number of venting part 210 is one, but this is not always the case, and the number of venting part 210 can vary. As an example, the number of venting parts 210 may be two, and the venting part 210 may be positioned so as to face each other at both ends in the longitudinal direction of the module frame 200. At this time, the venting part 210 may be provided at a position corresponding to the peripheral region 120a of the battery cell stack 120. In another example, the number of venting parts 210 may be two or more, may be arranged in rows or columns. The venting parts 210 arranged in rows or columns may be disposed at a distance, and in order to effectively discharge the gas inside the battery module 100, it may be preferable that the intervals between the respective venting parts 210 are equal.

At this time, the direction in which the plurality of rows are arranged may be along the longitudinal direction (x-axis direction) of the battery cell stack 120. Further, the direction in which the plurality of rows are arranged may be along a direction (y-axis direction or z-axis direction) perpendicular to the longitudinal direction of the battery cell stack 120.

The shape of the venting part 210 may be provided in various ways. In Figs. 2 to 6 described above, it is shown that the pattern portion 212 of the venting portion 210 has a concentric circles pattern shape, and the support part 214 has an x-shaped bar shape. However, similarly to Fig. 7 (a) showing an example of the venting part 210 provided in the B region, not only the support portion 214 is provided as an x-shaped bar composed of at least two bars, but also is able to provide a straight bar made of one bar as shown in Fig. 7(b). The straight bar has the advantage that the venting hole 211 can be formed large, but may have a disadvantage that it is difficult to firmly support the pattern part 212. In addition, not only the pattern part 212 has a concentric pattern shape as shown in Figs. 7 (a) and 7 (b), but also it will also be possible to have a concentric diagram pattern shape whose centers coincide with each other as shown in Fig. 7(b). The diagram pattern of the venting part 210 may be provided differently from the above, and its shape will not be limited by the illustrated drawings.

Meanwhile, the discharge direction in which the gas inside the battery module 100 is discharged to the outside through the venting part 210 may be a direction from the hole-inlet port 211a to the hole-outlet port 211b. By changing the positions of the hole-inlet port 211a and the hole-outlet port 211b of the venting hole 211, the direction of heat, gas, or flame discharged from the venting part 210 can be adjusted.

When the hole-inlet port 211a and the hole-outlet port 211b on the z-axis are formed at different positions in the longitudinal direction (x-axis direction) or in the stacking direction (y-axis direction), the discharge direction may form an angle with the direction from the battery cell stack 120 toward the hole-inlet port 211a. Thereby, the directions of the high-temperature heat, gas, and flame flown in from the battery cell stack 120 can be switched, and the length of the discharge path can be increased, so that the gas or the like discharged through the hole-outlet port 211b may have a lower temperature.

Further, the hole-inlet port 211a and the hole-outlet port 211b is formed so that the discharge direction of the venting part 210 forms an angle with the direction in which one surface of the module frame 200 in which the venting part 210 is formed is located, which may be for minimizing the influence on the adjacent battery module 100 in the battery pack. Specifically, the plurality of battery modules 100 may be arranged along the x-axis direction in the battery pack, wherein the venting part 210 may be formed on one surface of the module frame 200 located on the x-axis for various reasons such as design. When the venting part 210 is positioned on the x-axis, it is easy to affect other adjacent battery modules 100. Therefore, it may be desirable to make the discharge path of the venting part 210 form an angle with the x-axis, more specifically, such that the discharge path of the venting part 210 is formed in a direction in which the adjacent battery module 100 is not located..

Here, it is preferable that the heat, gas, or flame discharged from the venting part 210 diffuse more rapidly to the outside of the battery module 100. Therefore, the size of the hole-outlet port 211b may be larger than that of the hole-inlet port 211a.

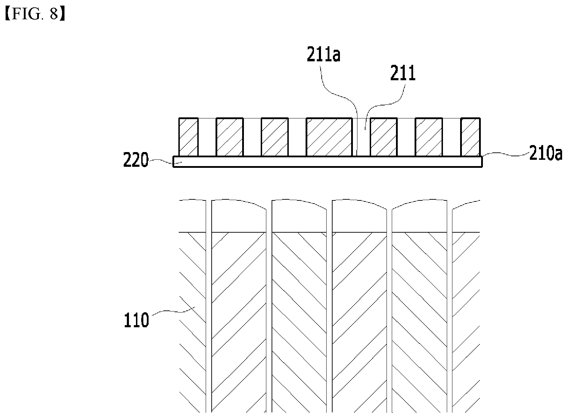

Fig. 8 is a view showing that the blocking sheet is provided in the venting part of the battery module according to an embodiment of the present disclosure.

Referring to Fig. 8, a blocking sheet 220 for covering the hole of the venting part 210 may be arranged at a part corresponding to the inlet port 210a of the venting part 210. The blocking sheet 220 can prevent foreign matter from flowing in from the outside through the venting hole 211. Additionally, the blocking sheet 220 may include a material for alleviating the ignition phenomenon at the time of occurring an ignition inside the battery module 100. Here, the blocking sheet 220 may be provided with a material that melts at a specific temperature or pressure or higher. When an ignition occurs inside the battery module 100, the blocking sheet 220 may open the venting hole 211, heat, gas, flame and the like may be discharged through the venting hole 211. For example, the blocking sheet 220 may be provided as a PF film. In another example, the blocking sheet 220 may include a fire extinguishing agent that can suppress a combustion reaction by releasing carbon dioxide gas. When the blocking sheet 220 contains a fire extinguishing agent, the battery module 100 may have a self-extinguishing function. Specifically, when an ignition occurs in the battery module 100, the fire extinguishing agent can reduce the influence of heat, gas or flame inside the battery module 100, whereby continuous ignition phenomena within the battery module 100 or between the battery modules 100 can be prevented or delayed. The blocking sheet 220 may include one or more fire extinguishing agents selected from the group consisting of inorganic carbonate, inorganic phosphate, and inorganic sulfate. However, the fire extinguishing agent included in the blocking sheet 220 of the present disclosure is not limited to the above-described examples.

On the other hand, the above-mentioned battery module 100 may be included in the battery pack. The battery pack includes one or more battery modules according to the present embodiment, and may have a structure that is packed together with a battery management system (BMS) and a cooling device that control and manage battery's temperature, voltage, etc.

Within the battery pack, the battery modules 100 may be arranged in rows and columns. For example, the battery module 100 may be disposed so as to face the end plate 400 with another battery module 100. When referring to the position of the end plate 400 of the above drawing, at least two battery modules 100 may be understood to be disposed along the longitudinal direction (x-axis direction). In another example, the battery module 100 may be arranged along a y-axis or a z-axis in addition to a different x-axis. The direction in which the battery modules 100 are stacked in the battery pack may differ depending on the volume and shape of the battery pack or the internal structure of the device on which the battery pack is mounted. Thus, the stacking direction of the battery module 100 may be different from the above-described example.

At this time, in order to prevent continuous ignition phenomena between the battery modules 100 in the battery pack, the position of the venting part 210 and the discharge direction of the venting part 210 can be determined. Specifically, the position and discharge direction of the venting part 210 included in one battery module 100 may be designed in a direction not to face another adjacent battery module 100. More detailed information related thereto may be described with reference to the above description.

The battery module and the battery pack including the same can be applied to various devices. Such a device may be applied to a vehicle means such as an electric bicycle, an electric vehicle, or a hybrid vehicle, but the present disclosure is not limited thereto, and is applicable to various devices that can use a battery module and a battery pack including the same, which also falls under the scope of the present disclosure.

Although the preferred embodiments of the present disclosure has been shown and described above, the scope of the present disclosure is not limited thereto, and numerous changes and modifications can be devised by those skilled in the art using the principles of the invention defined in the appended claims, which also falls within the spirit and scope of the present disclosure.

### [Description of Reference Numerals]

100: battery module
110: battery cell
120: battery cell stack
200: module frame
210: venting part
210a: inlet port
210b: outlet port
211: venting hole
212: pattern part
214: support part
220: blocking sheet
300: busbar frame
400: end plate
510: busbar
520: terminal busbar

## Claims

1. A battery module comprising:
a battery cell stack in which a plurality of battery cells are stacked in one direction,
a module frame that houses the battery cell stack and has an inner surface and an outer surface, and
an end plate that is coupled to the module frame and covers the front surface or rear surface of the battery cell stack,
wherein a venting part is formed in the module frame, and
wherein the venting part comprises a pattern part having a concentric diagram shape and a support part for supporting the pattern part.

2. The battery module of claim 1, wherein:
the support part has an X-shape.

3. The battery module of claim 1, wherein:
the venting part comprises at least one of an inlet port formed in the inner surface of the module frame and a venting hole in the form of a hole that defines an outlet port formed on the outer surface.

4. The battery module of claim 3, wherein:
a terminal region of the venting hole has a reverse tapered shape, and
the terminal region is a region including the inlet port or the outlet port.

5. The battery module of claim 3, wherein:
based on the axial cross section of the venting hole, the side surface of the venting hole extending between the inlet port and the outlet port has a round shape, and
an effluent flowing in through the inlet port is moved to the outlet port along the round shape.

6. The battery module of claim 3, wherein:
a blocking sheet is located at a part corresponding to the inlet port of the venting part.

7. The battery module of claim 6, wherein:
the blocking sheet is formed of a material that melts in accordance with the temperature inside the module frame.

8. The battery module of claim 6, wherein:
the blocking sheet comprises at least one selected from the group consisting of inorganic carbonate, inorganic phosphate, and inorganic sulfate.

9. The battery module of claim 1, wherein:
when a direction in which the plurality of battery cells are stacked is defined as a stacking direction, the venting part is formed on one surface of the module frame extending along the stacking direction.

10. The battery module of claim 1, wherein:
when the direction from the front surface to the rear surface of the battery cell stack is defined as the longitudinal direction,
the longitudinal position of the venting part is closer to the front surface or rear surface of the battery cell stack than to the central part of the battery cell stack having the same longitudinal distance as the front and rear surfaces of the battery cell stack.

11. The battery module of claim 1, wherein:
the battery cell comprises an electrode lead protruding from one end part of the battery cell, and the electrode lead is located on the front surface or rear surface of the battery cell stack.

12. A battery pack comprising at least one battery module as set forth in claim 1.
